# EUROPEAN PATENT SPECIFICATION

(11) **EP 1 824 704 B1**
(45) Date of publication and mention of the grant of the patent: **14.05.2008**
(21) Application number: 04800407.1
(22) Date of filing: 26.11.2004
(51) Int. Cl.: B60R 19/48, B60R 19/56, B60S 9/02

(54) **A DEVICE FOR MOUNTING ON A VEHICLE COMPRISING SUCH A DEVICE**
VORRICHTUNG ZUR BEFESTIGUNG AN EINEM SOLCH EINE VORRICHTUNG UMFASSENDEN FAHRZEUG
DISPOSITIF SE FIXANT SUR UN VEHICULE ET VEHICULE COMPRENANT CE DISPOSITIF

(43) Date of publication of application: 29.08.2007
(73) Proprietor: VOLVO LASTVAGNAR AB, 405 08 Göteborg (SE)
(72) Inventor: LILJEBLAD, Benny, S-443 38 Lerum (SE); REGNELL, Hans, S-442 50 Ytterby (SE); GUSTAFSSON, Jens, S-431 36 Molndal (SE)
(74) Representative: Fröhling, Werner Otto
(86) International application number: PCT/SE2004/001750
(87) International publication number: WO 2006/057584

(56) References cited:
- WO-A1-96/33894
- DE-A- 2 309 554
- GB-A- 2 090 204
- JP-A- 5 345 545
- US-A- 1 627 317

## Description

### Background of the Invention

The present invention relates to a device for mounting on a vehicle, and more specifically for mounting on a large vehicle, such as a truck, trailer or semi-trailer. Further, the present invention relates to a vehicle comprising such a device.

Large vehicles, such as trucks, are often utilised when transporting heavy loads, such as crates, containers, work machines, smaller vehicles and the like. When handling heavy loads, i.e. loading or unloading of such a large vehicle, the centre of gravity of the load may shift, and even shift substantially during e.g. unloading of a heavy load carrying container. Accordingly, when the centre of gravity shifts, e.g. towards the back end of the large vehicle, the force provided by the centre of gravity upon the back end of the truck may induce heavy stress on the rear axle of the truck, and when the load is moved even further back, it induces heavy stress on the rear end of the truck, which may damage the truck or potentially tip the truck backwards or sideways risking causing damage to the people and material around the vehicle as well as the vehicle itself.

In order to overcome said problem, several solutions are known in the art, such as several types of support legs, e.g. manual or hydraulic jack-legs, which during load handling are set in an active position resting on the ground, and when not in use are retracted to an inactive position, either as being a part of the large vehicle or being able to be stowed away on the vehicle. Another solution is to provide the vehicle with specially adapted lifting and handling devices, which are able to counter or safely modify the shifts of centre of gravity.

Typically large vehicles, such as trucks, are designed with relatively high ground clearance, which constitutes a risk in terms of road safety for smaller motorists because a collision between a truck and a small vehicle, such as a passenger vehicle, the small vehicle will penetrate into or under the underside of the frame of the large vehicle. The result may be that the smaller vehicle becomes seriously damaged and the passengers seriously injured.

Accordingly, different solutions have been developed to solve this above mentioned other safety problem by providing underrun protection devices, such as on the lower front or rear section of a large vehicle, reinforced fixed or stowable structures such as a rigid or force-absorbing beam element arranged horizontally at the front and/or the rear section, impact load sensitive devices for creating a reactive force, and the like. Different statutory requirements are applied in different countries concerning use and dimensions of underrun protection devices, including device ground clearance. Weight and space restrictions on the trucks may result in a limited space available for the load handling devices and an underrun protection device.

The functions of an underrun protection and vehicle support provided in a combined device by generic DE-A-2 309 554.

### Description of the Invention

Accordingly, the invention relates to a device for mounting on a vehicle according to claim 1. The invention further relates to a vehicle comprising at least one of said devices according to claim 9.

By the invention, one single device is provided, which constitutes both an underrun protection and a vehicle support. Hereby, a better use of the space available on a frame of a vehicle onto which the device is to be mounted is achieved, and thus more space for other devices is provided, especially at the rear end of a large vehicle. Also, when being mounted to a vehicle, the device according to the invention improves transport efficiency by lowering the overall weight, and thus decreases environmental and economical costs. Thus, the risk of tilting the vehicle while loading/unloading is significantly reduced, while the load inside the vehicle during standstill e.g. during crane operations is shifting.

The invention comprises at least one shiftable carrier arm, which is mountable to a frame of said vehicle and is provided with at least one substantially horizontally extending beam, which in said first active position constitutes an underrun protection beam, and in said second active position constitutes a support beam, and displacement means for shifting of said at least one shiftable carrier arm between said first and second active positions. Hereby, when mounted on a vehicle in said first active position, said device constitutes an underrun protection, presenting an impact element, i.e. the substantially horizontally extending beam/s and/or carrier arm/s, in the event of a collision with a small vehicle. Further, when mounted on a vehicle in said second active position, said device constitutes a vehicle support, which is able to support and thus stabilize the part of the vehicle onto which said device is attached and is especially suited for supporting a single axle within the bogie for weight optimisation purposes. In the second active position, a further advantage involves the device providing a load force or weight-distributing element in the form of the support beam(s), when the support beam is adjacent the ground onto which the device rests.

According to the invention the at least one shiftable carrier arm is shiftable in a substantially vertical direction, and preferably shiftable by pivoting said at least one carrier arm around an axis substantially parallel to said at least one substantially horizontally extending beam. Hereby, the forces countered by the device in the first and second active position may be relatively high and of a predetermined value. Further, a simple construction of the device is assured, reducing production and mounting costs. Where the device is shiftable in a substantially vertical direction, e.g. when said carrier arms are provided as tube sections being mutually telescopically shiftable, the forces to be countered by said device may be set relatively high. Also, in the second active position, the carrier arms may be shifted by pivoting them to an angle relative to vertical in order for the impact beam/s to be arranged for an improved impact distributing effect, which angle is dependent upon the clearance of the large vehicle and the force to be encountered in such a collision in order to reduce damage to both the large vehicle and the vehicle colliding with it.

In another embodiments, said displacement means include a hydraulic or pneumatic cylinder for pivoting said at least one carrier arm. Hereby, the displacement means may be provided away from the direction of a possible impact force, thus protecting the displacement means against damage from said impact. Further, an increased force available for shifting said carrier arms between said first and second active position is provided as compared to e.g. manual displacement means being provided.

According to the invention at least two carrier arms are provided, one substantially on each side of the at least one substantially horizontally extending beam. Hereby, in the first active position, the stability of the underrun protection provided by said device is improved during a possible impact. Further, an improved stabilization of the substantially horizontally extending beam is provided in both active positions to hold said beam horizontal.

According to the invention said at least two carrier arms are individually adjustable in length. Thereby, in the second active position, the at least two carrier arms are adjustable in height in order for said device to conform to any uneven ground under the vehicle, which provides better vehicle support during load handling.

In further embodiments, said at least one substantially horizontally extending beam comprises a substantially flat plate element and/or a substantially tubular beam element. Hereby, different beam designs are available during construction of said device in order to adapt said device to the make of the large vehicle, which said device is to be mounted on. Accordingly, an improved impact structure and the possibility of providing weakening zones in the substantially horizontally extending beam is provided.

In one embodiment, a part of said at least one substantially horizontally extending beam is provided with a flexible abutting element. Thereby, in the first active position, a further impact absorbent is provided, which decreases the damages to a colliding small vehicle. In the second active position, uneven ground is further compensated with by providing the abutment element to form a substantially uniform, horizontally extending, level layer, upon which the support beam/s may rest substantially horizontally during load handling, which further improves the support to the large vehicle.

In another embodiment, the first active position may be selected between at least two different height positions. This may be advantageous when driving in different countries, when there are different requirements for the position of the underrun protection beam.

In another embodiment, said device is further shiftable into a third position. Thus, the device according to the invention may advantageous be stowed into a third, preferably inactive position, e.g. substantially above the lower part of the front or back end of the vehicle, or alternatively under the frame of the vehicle, when neither constituting an underrun protection nor a vehicle support. This may be advantageous when driving in countries or areas, where no underrun protection is required in order to improve the departure angle of the large vehicle, e.g. on a construction site. This may also be advantageous when a trailer is coupled to the vehicle. Alternatively, said third position may also be an active position of said device, e.g. providing a step for the operator or other useful function.

In one embodiment of a vehicle according to the invention, said at least one device is mounted on a rear and/or front end of the vehicle. During load handling, the weight of the load may be shifted towards the rear of the vehicle, and the force induced from this is moved further back. Accordingly, a rear position of said device according to the invention is advantageous, providing a stable support for the vehicle. Alternatively, if the load is to be shifted towards the front of the vehicle, e.g. when the load is handled by cranes, a device provided at the front end of a vehicle is advantageous, either alone or in combination with a rear end position of a device according to the invention, thus providing vehicle support at the front end of the vehicle. Also, a device constituting an underrun protection may be needed only at the rear or/and at the front end depending upon make and ground clearance of the large vehicle and the prevailing statutory requirements.

In another embodiment of a vehicle according to the invention, said at least one substantially horizontally extending beam is extending to a length, which substantially equals the total width of said vehicle. Thus, an underrun protection may be provided in the first active position, which provides protection under the main part of the front and/or back end of the vehicle.

In yet another embodiment of a vehicle according to the invention, the displacement means include hydraulic or pneumatic cylinders connected to a hydraulic or pneumatic system, respectively, on the vehicle. Such a hydraulic or pneumatic system is often available on many large vehicles, which simplifies installation and reduces the costs of a vehicle comprising a device according to the invention.

### Brief description of the drawings

In the following, the invention is described in more detail with reference to the accompanying schematic drawings, in which:
- Fig. 1: is a side view of a device according to a preferred embodiment in a first active position constituting an underrun protection;
- Fig. 2: is a side view of a device of figure 1 in a second active position constituting a vehicle support during load handling,
- Fig. 3: is a side view of a vehicle according to the present invention, where a device according to the present invention is mounted and shifted to the first active position;
- Fig. 4: is a side view of a vehicle as in figure 3, the centre of gravity is shifted towards the rear end of the vehicle;
- Fig. 5: is a side view of a vehicle as in figure 3, the centre of gravity is shifted beyond the rear end of the vehicle;
- Fig. 6: is a side view of a vehicle according to the present invention, said vehicle comprising a tipper device;
- Fig. 7: is a side view of a vehicle comprising two devices according to the invention for a vehicle provided with a crane device;
- Fig. 8: is a side view of a vehicle according to the present invention, said vehicle comprising a rear lift for load handling; and
- Fig. 9: is a side view of a device according to the present invention, illustrating a carrier arm being shifted substantially vertically between a first and second active position.

### Detailed description of the invention

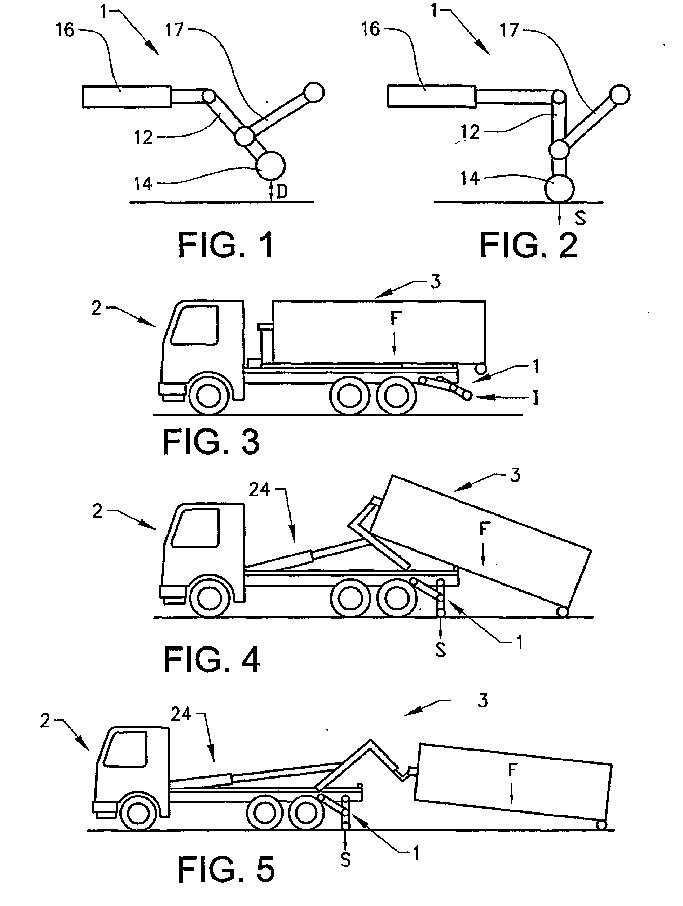

A device 1 in a preferred embodiment of the present invention is shown in figure 1 in a very schematic side view in a first active position, in which it constitutes an underrun protection. The device 1 comprises a carrier arm 12 provided with an in a direction perpendicular to the plane of the paper on figure 1 substantially horizontally extending beam 14, which in said first position constitutes an underrun protection beam. Further said device 1 comprises displacement means 16, comprising a hydraulic or pneumatic cylinder, and a pivot arm 17, a first part upon said pivot arm 17 being pivotably attached to a first part on said carrier arm 12, and a second part of said pivot arm 17 being pivotably attachable to a frame of a vehicle (not shown), to which the device 1 is to be mounted. In said first active position, the underrun protection beam 14 is in a position having a predetermined ground clearance D between the lower part of said underrun protection beam 14 and the ground. This distance may be selected based on statutory requirements, often being less or equal to 550 mm.

In figure 2, the device 1 of figure 1 is shown, also very schematically, in a side view in a second active position in which the device 1 constitutes a vehicle support. The displacement means 16 is connected to a carrier arm 12 and is attachable to said frame (not shown). By activating the displacement means 16, the device 1 is shifted from the first active position in figure 1 to the second active position in figure 2 by pivoting the carrier arm 12 around an axis (not shown) extending parallel to said at least one substantially horizontally extending beam 14. Thus, the carrier arm 12 is placed in a substantially vertical position with one end of said carrier arm 12 adjacent to the ground, e.g. resting directly on the ground, in order to enable the device 1 to provide vehicle support, when a load is being shifted on a large vehicle, on which said device 1 is mounted, thereby creating a force S in a direction towards the ground, which is counteracted by said device 1 in the second active position.

The device 1 comprises at least two carrier arms 12, which may preferably be of a longitudinally extending shape or any alternative form being suited for the device 1 constituting an underrun protection and a vehicle support, respectively, e.g. rhomboid, rectangular, square, semicircular, elliptical etc., and may in cross section be of any suitable dimension and shape, e.g. square, triangular, circular, semicircular or the like, and be solid or tubular. If the device 1 is provided with one carrier arm 12, this carrier arm 12 may advantageously be positioned substantially in the middle of the substantially horizontally extending beam 14 in order to provide stable vehicle support, when the device 1 is in the second active position. Each end of the substantially horizontally extending beam 14 is provided with one carrier arm 12 in order to remove the carrier arms 12 from the area of possible impact, when the device 1 constitutes an underrun protection, and in order to provide lateral stability during transport of said vehicle. Further carrier arms 12 may be provided on said device 1 in suitable positions on said of the substantially horizontally extending beam 14 in order to add further support to the vehicle during load handling, also to adapt to uneven ground, and further improve lateral stability to the device 1, when it constitutes an underrun protection.

The device 1 comprises one or more substantially horizontally extending beams 14, e.g. two parallel extending beams of the same length, two or more beams in line, or the like. Thus, a design of the device as an underrun protection is enabled, which may produce weakening zones in predetermined areas of the device for a controlled damage to the device 1. The substantially horizontally extending beam 14 may either be a substantially flat plate element (not shown) extending perpendicular to the plane of the paper, and/or be a solid or hollow substantially tubular beam element 14 of a generally round, semicircular, square, rectangular or other suitable cross section, and may be of any suitable shape, dimension, position on the carrier arm 12, and material for aiding the device in constituting an effective underrun protection and vehicle support.

The device 1 comprising at least two carrier arms 12, at least one substantially horizontally extending beam 14, and the displacement means 16 further maybe comprising at least one pivot arm 17, may be made from any suitable material, e.g. stainless steel for the carrier arm/s 12 for increased strength when supporting the vehicle during handling of heavy loads, aluminium and/or plastic materials for the substantially horizontally extending beam 14 for increased impact force distribution or absorption, and steel, aluminium or plastic for said pivot arm 17.

In figure 3 is shown a vehicle according to the invention, i.e. a conventional truck 2 comprising a device 1 according to the invention, in which the device 1 is in a first active position constituting an underrun protection. In this embodiment, the device 1 is provided at the rear end of the truck 2 in order to counteract or absorb impact forces I from a possible collision with a small vehicle. A load 3 in the form of a container is provided on the truck 2 having a load, which imparts a gravitational force F in a vertical direction towards the ground. Advantageously, the displacement means 16 may incorporate a damping device that allows the underrun protection to absorb the impact force I in a more resilient manner. When the displacement means 16 are hydraulic or pneumatic cylinders, the damping device may constitute a valve that opens at a predefined load.

In figure 4, a truck 2 as shown in figure 3 is shown during load handling, in which a device 1 according to the invention is in the second active position, thus providing a vehicle support for the truck 2. The load comprising a container 3 is shifted on the truck to the rear end by utilising a load handling device provided on the truck 2, e.g. a hook-lift 24. At this point in time during load handling, just before the rear of the container hits the ground, the forces acting upon especially the rear axle of the bogie are maximal, and providing a vehicle support in the second active position of the device enables weight reduction on the rear axle. In figure 5, the container load 3 has been shifted to a position beyond the rear end of the truck 2, such that the force F resulting from the weight of the container load is acting behind the rear end of the truck 2. Thus, the device 1 constitutes a vehicle support and the support force S has decreased as compared to the situation in figure 4.

If the vehicle is provided with air suspension, the device 1 will also help to decrease the time to load and unload the vehicle. Normally, the air pressure in the air suspension for the vehicle described above must be as high as possible in order to support the load and prevent the rear of the vehicle to sink. Especially when the vehicle is empty and a loading cycle is started, the time to fill the air suspension is relatively long. For example, the air suspension of an empty vehicle has an air pressure of 2 bars. To fill the suspension to 12 bars may take 20 seconds. Since the filling of the air suspension is automatic, the filling does not start until the load cycle has started. This means that a driver must start to load, and then wait for the suspension to fill before he can commence. With the device 1 in the second active position, the loading cycle can be performed without any waiting.

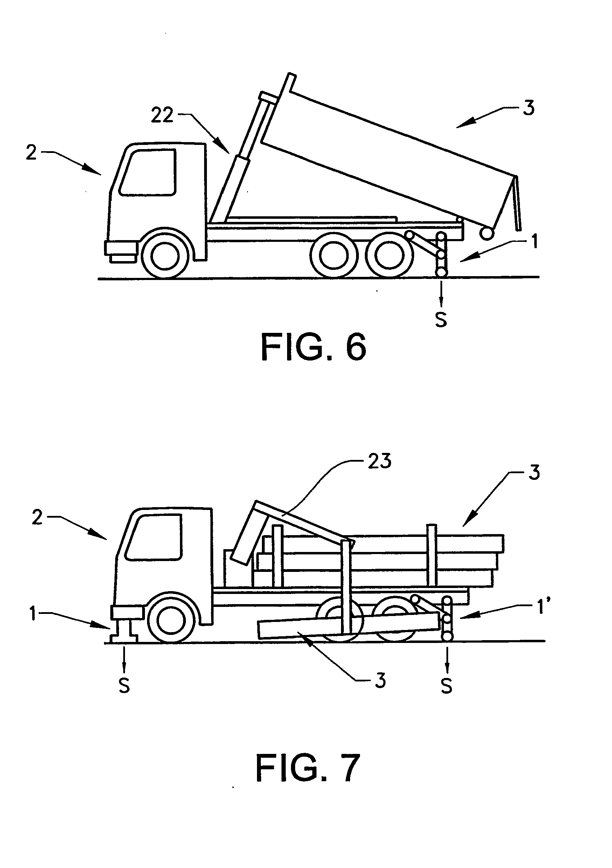

In figure 6, a truck 2 with a load 3 in the form of a tipper body is shown during a tipping cycle, in which the device 1 according to the invention is in the second active position, thus providing a vehicle support for the truck 2. The goods to be tipped off is shifted to the rear end by utilising a load handling device provided on the truck 2, e.g. a dumping cylinder 22.

A device 1 according to the invention may also be provided as a front end underrun protection and vehicle support. In figure 7 is shown a schematic side view of a truck 2 comprising two such devices 1, 1' according to the invention, one 1' at the rear end and one 1 at the front end of the truck 2. A further vehicle support 1' is an advantage, especially for truck 2 provided with crane or hoist arrangements 23, where the centre of gravity shift may be taking place towards the front end of the truck 2 or even towards the lateral sides of the truck, because the resulting forces may then be counteracted upon by a further vehicle support 1'. Accordingly, the devices 1,1' may be shiftable to a position in the second active position in which both laterally acting forces and forces acting at the two ends of the truck 2 is counteracted upon by the devices 1, 1', where e.g. the carrier arm/s 14 are protruding laterally on the truck 2. Retracted in the first active positions, the devices 1,1' constitute a front underrun protection 1 and a rear underrun protection device 1'.

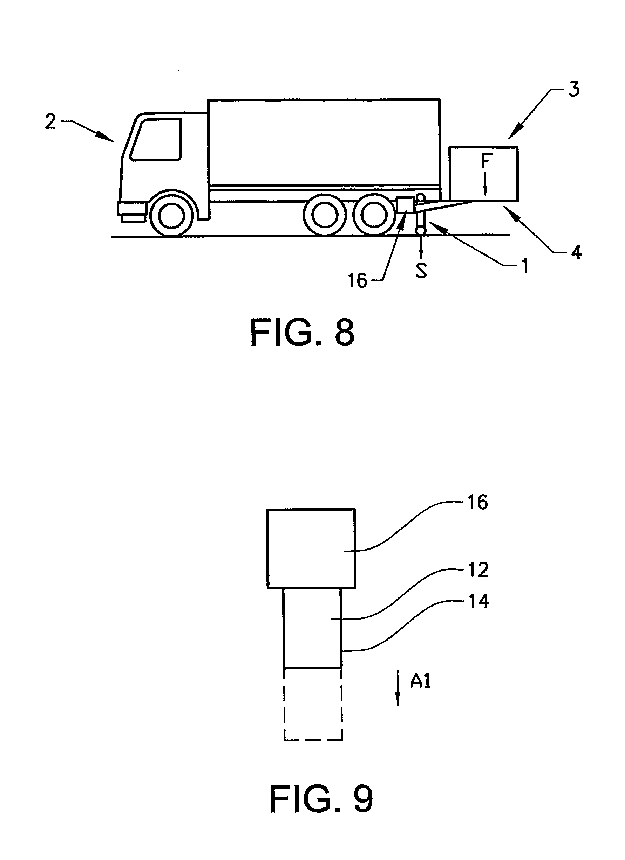

In figure 8 is shown a truck 2, where the displacement means 16 are part of the hydraulic or pneumatic system already available on said truck 2, for a lift arrangement 4 holding a load 3. Alternatively, the displacement means 16 of said device 1 may also be provided as part of the general hydraulic or pneumatic system otherwise available on the truck. This may significantly reduce the implementing costs for said device 1. Alternatively, the displacement means 16 is provided with the device 1 having a separate hydraulic or pneumatic system, or may even be a manually operated mechanical device, e.g. operated by manually shifting the device 1 between said first and second active positions, and vice versa.

Also, the displacement means 16 may be provided on one or both sides of the device 1 on the extend of the substantially horizontally extending beam/s 14 for improved control of the position of the carrier arm/s 12 in the first and second active positions.

The device 1 may also be adjustable in a cross-direction of the vehicle, that is the carrier arm on the right hand side and the carrier arm on the left hand side may be adjusted to different heights. This enables the device 1 to compensate for an uneven ground. It is also possible to incorporate adjustable supports at each end of the beam 14 in order to compensate for unevenness of the ground. The support may be manually or automatically adjustable. It is of course also possible to use removable supports to compensate for an uneven ground when necessary.

In figure 9 is shown a side view of another embodiment of a device 1 according to the invention. In figure 9, the displacement means 16 are provided for attachment to a large vehicle (not shown), preferably to a frame of said vehicle. The displacement means 16 cooperates with a carrier arm 12, which by activation of said displacement means 16 is shiftable, as indicated with the arrow A1, between a first and second active position, as indicated with a full line and a broken line, respectively. At an opposite end as compared to the displacement means 16, the carrier arm 12 is provided with a beam 14, which in this embodiment is a flat plate element (not shown), extending substantially horizontally in a vertical plane perpendicular to the plane of the paper of figure 8.

The substantially horizontally extending beam/s 14 may be provided with an abutting element (not shown), e.g. a relatively thick and soft plastic layer or a soft flexible plastic or metal element, such as flexible metal wires, or durable plastic elements, or a combination hereof. Said abutting element is bendable or flexible in order to provide a soft impact distributing layer for said underrun protection beam, when said device 1 is in the first active position, and to provide a ground abutting layer for said support beam to rest upon in a substantially horizontal level, when said device 1 is in the second active position. Said abutting element provides a substantially horizontal, level and preferably non-flexible layer, when the device 1 is resting on the ground in the second active position, and a flexible layer, when the device 1 is suspended with a predetermined ground clearance in the first active position, reducing damage to smaller vehicles.

Said device according to the invention may further be shiftable into a third active or inactive position (not shown), in which said device 1 constitutes neither an underrun protection nor a vehicle support. This is especially advantageous in countries, where no statutory regulations prevail concerning the use of underrun protection devices during travel, where such an inactive position of the device in question results in an improved departure angle of the vehicle. Also, in a third active position, the device 1 may have other functions, e.g. a step aiding operators and drivers of the vehicle to enter and leave the loading area of the vehicle, or the like.

## Claims

1. A device (1) for mounting on a vehicle (2), said device (1) being shiftable between at least a first active position, in which it constitutes an underrun protection (I), and a second active position, in which it constitutes a vehicle support (S), wherein said device (1) comprises at least two shiftable carrier arms (12,17) which are mountable to a frame of said vehicle (2), the device further being provided with at least one substantially horizontally extending beam (14), which in said first active position constitutes an underrun protection beam, and in said second position constitutes a support beam, and displacement means (18) for shifting of said at least one shiftable carrier arm between said first and second active positions, whereby the at least two carrier arms (12, 17) are provided, one substantially on each side of the at least one substantially horizontally extending beam, and the shiftable carrier arms (12,17) are shiftable in a substantially vertical direction, **characterized by** said at least two carrier arms (12, 17) being individually adjustable in length.

2. A device (1) as claimed in claim 1, wherein at least one of said shiftable carrier arms (12) being shiftable by pivoting said at least one carrier arm (12) around an axis substantially parallel to said at least one substantially horizontally extending beam.

3. A device (1) as claimed in any one of the preceding claims, wherein said displacement means (16) include a hydraulic cylinder (16) for pivoting said at least one carrier arm (12).

4. A device (1) as claimed in any one of the preceding claims, wherein said displacement means (16) include a pneumatic cylinder for pivoting said at least one carrier arm (12).

5. A device (1) as claimed in any one of the preceding claims, wherein said at least one substantially horizontally extending beam comprises a substantially flat plate element.

6. A device (1) as claimed in any one of the preceding claims, wherein said at least substantially horizontally extending beam comprises a substantially tubular beam element.

7. A device (1) as claimed in any one of the preceding claims, wherein a part of said at least one substantially horizontally extending beam is provided with a flexible abutting element.

8. A device (1) as claimed in any one of the preceding claims, wherein said device (1) further is shiftable into a third position.

9. A vehicle (2) comprising at least one device according to any one of the preceding claims, said at least one device being shiftable between at least a first active position, in which it constitutes an underrun protection (I), and a second active position, in which it constitutes a vehicle support during load handling (S), said at least one device (1) comprising at least one shiftable carrier arm, which is mountable to a frame of said vehicle (2) and is provided with at least one substantially horizontally extending beam, which in said first active position is an underrun protection beam, and in said second active position is a support beam; and displacement means (16) for shifting of said at least one displaceable carrier arm between said first and second active positions.

10. A vehicle (2) as claimed in claim 9, wherein at least one device is mounted on a rear end of the vehicle (2).

11. A vehicle (2) as claimed in claim 11 or 12, wherein at least one device (1) is mounted on a front end of the vehicle (2).

12. A vehicle (82) as claimed in any one of claims 9 to 11, wherein said at least one substantially horizontally extending beam is extending to a length which substantially equals a total width of said vehicle (2).

13. A vehicle (2) as claimed in any one of claim 9 to 12, wherein the displacement means (16) include hydraulic cylinders connected to a hydraulic system on the vehicle (2).

14. A vehicle (2) as claimed in anyone of claims 9 to 12, wherein the displacement means (16) include pneumatic cylinders connected to a pneumatic system on the vehicle (2).

## Patentansprüche

1. Vorrichtung (1) zur Montage an einem Fahrzeug (2), wobei die Vorrichtung (1) zwischen einer ersten aktiven Position, in der sie einen Unterlaufschutz (I) bildet, und einer zweiten aktiven Position verstellbar ist, in der sie eine Fahrzeugstütze (S) bildet, wobei die Vorrichtung (1) wenigstens zwei verstellbare Tragarme (12, 17) umfasst, die an einem Rahmen des Fahrzeugs (2) anbringbar sind, wobei die Vorrichtung außerdem mit wenigstens einem sich im Wesentlichen horizontal erstreckenden Träger (14) versehen ist, der in der ersten aktiven Position einen Unterlaufschutzträger bildet und in der zweiten Position einen Stützträger bildet, und einer Verschiebeeinrichtung (16) für ein Verstellen des wenigstens einen verstellbaren Tragarms zwischen der ersten und zweiten aktiven Position versehen ist, wobei einer der wenigstens zwei Tragarmen (12, 17) im Wesentlichen auf jeder Seite des sich im Wesentlichen horizontal erstreckenden Trägers vorgesehen ist und die verstellbaren Tragarme (12, 17) in einer im wesentlichen vertikalen Richtung verstellbar sind, **dadurch gekennzeichnet, dass** die wenigstens zwei Tragarme (12, 17) in ihrer Länge einzeln einstellbar sind.

2. Vorrichtung (1) nach Anspruch 1, bei der wenigstens einer der verstellbaren Tragarme (12) durch Verschwenkung des wenigstens einen Tragarms (12) um eine im Wesentlichen parallel zu dem wenigstens einen, sich im Wesentlichen horizontal erstreckenden Träger verlaufende Achse verstellbar ist.

3. Vorrichtung (1) nach einem der vorhergehenden Ansprüche, bei der die Verschiebeeinrichtung (16) einen Hydraulikzylinder (16) für eine Verschwenkung des wenigstens einen Tragarms (12) umfasst.

4. Vorrichtung (1) nach einem der vorhergehenden Ansprüche, bei der die Verschiebeeinrichtung (16) einen pneumatischen Zylinder für eine Verschwenkung des wenigstens einen Tragarms (12) umfasst.

5. Vorrichtung (1) nach einem der vorhergehenden Ansprüche, bei der der wenigstens eine, sich im Wesentlichen horizontal erstreckende Träger ein im Wesentlichen flaches Plattenelement umfasst.

6. Vorrichtung (1) nach einem der vorhergehenden Ansprüche, bei der der wenigstens eine, sich im Wesentlichen horizontal erstreckende Träger ein im Wesentlichen rohrförmiges Trägerelement umfasst.

7. Vorrichtung (1) nach einem der vorhergehenden Ansprüche, bei der ein Teil des wenigstens einen, sich im Wesentlichen horizontal erstreckenden Trägers mit einem flexiblen Anschlagelement versehen ist.

8. Vorrichtung (1) nach einem der vorhergehenden Ansprüche, bei der die Vorrichtung (1) außerdem in eine dritte Position verstellbar ist.

9. Fahrzeug (2) mit wenigstens einer Vorrichtung nach einem der vorhergehenden Ansprüche, wobei die wenigstens eine Vorrichtung zwischen wenigstens einer ersten aktiven Position, in der sie einen Unterlaufschutz (I) bildet, und einer zweiten aktiven Position, in der sie eine Fahrzeugstütze während einer Lasthandhabung (S) bildet, verstellbar ist, wobei die wenigstens eine Vorrichtung (1) wenigstens einen verstellbaren Tragarm, der an einem Rahmen des Fahrzeugs (2) anbringbar ist und mit wenigstens einem sich im Wesentlichen horizontal erstreckenden Träger versehen ist, der in der ersten aktiven Position einen Unterlaufschutzträger und in der zweiten aktiven Position einen Stützträger bildet, und eine Verschiebeeinrichtung (16) für eine Verstellung des wenigstens einen verschiebbaren Tragarms zwischen der ersten und zweiten aktiven Stellung umfasst.

10. Fahrzeug (2) nach Anspruch 9, bei dem wenigstens eine Vorrichtung an einem hinteren Ende des Fahrzeugs (2) angebracht ist.

11. Fahrzeug (2) nach Anspruch 11 oder 12, bei dem wenigstens eine Vorrichtung (1) an einem vorderen Ende des Fahrzeugs (2) angebracht ist.

12. Fahrzeug (2) nach einem der Ansprüche 9 bis 11, bei dem der wenigstens eine, sich im Wesentlichen horizontal erstreckende Träger sich in einer Länge erstreckt, die im Wesentlichen einer Gesamtbreite des Fahrzeugs (2) entspricht.

13. Fahrzeug (2) nach einem der Ansprüche 9 bis 12, bei dem die Verschiebeeinrichtung (16) hydraulische Zylinder umfasst, die an ein Hydrauliksystem des Fahrzeugs (2) angeschlossen sind.

14. Fahrzeug (2) nach einem der Ansprüche 9 bis 12, bei dem die Verschiebeeinrichtung (16) pneumatische Zylinder umfasst, die an ein pneumatisches System des Fahrzeugs (2) angeschlossen sind.

## Revendications

1. Dispositif (1) destiné à être monté sur un véhicule (2), ledit dispositif (1) pouvant être déplacé entre au moins une première position active, dans laquelle il constitue une protection anti-encastrement (I), et une deuxième position active, dans laquelle il constitue un support de véhicule (S), ledit dispositif (1) comprenant au moins deux bras de support déplaçables (12, 17) qui peuvent être montés sur un châssis dudit véhicule (2) et le dispositif étant en outre muni d'au moins une poutre s'étendant sensiblement horizontalement (14), qui dans ladite première position active constitue une poutre de protection anti-encastrement, et dans ladite deuxième position constitue une poutre de support, et des moyens de déplacement (16) pour déplacer ledit au moins un bras de support déplaçable entre lesdites première et deuxième positions actives, de sorte que les au moins deux bras porteurs (12, 17) soient agencés, un sensiblement de chaque côté de la au moins une poutre s'étendant sensiblement horizontalement, et les bras porteurs déplaçables (12, 17) peuvent être déplacés dans une direction sensiblement verticale, **caractérisé en ce que** lesdits au moins deux bras porteurs (12, 17) sont ajustables individuellement en longueur.

2. Dispositif (1) selon la revendication 1, dans lequel au moins un desdits bras porteurs déplaçables (12) peut être déplacé par pivotement dudit au moins un bras porteur (12) autour d'un axe sensiblement parallèle à ladite au moins une poutre s'étendant sensiblement horizontalement.

3. Dispositif (1) selon l'une quelconque des revendications précédentes, dans lequel lesdits moyens de déplacement (16) comportent un vérin hydraulique (16) pour faire pivoter ledit au moins un bras porteur (12).

4. Dispositif (1) selon l'une quelconque des revendications précédentes, dans lequel lesdits moyens de déplacement (16) comportent un vérin pneumatique pour faire pivoter ledit au moins un bras porteur (12).

5. Dispositif (1) selon l'une quelconque des revendications précédentes, dans lequel ladite au moins une poutre s'étendant sensiblement horizontalement comporte un élément de plaque sensiblement plat.

6. Dispositif (1) selon l'une quelconque des revendications précédentes, dans lequel ladite au moins une poutre s'étendant sensiblement horizontalement comporte un élément de poutre sensiblement tubulaire.

7. Dispositif (1) selon l'une quelconque des revendications précédentes, dans lequel une partie de ladite au moins une poutre s'étendant sensiblement horizontalement est munie d'un élément de butée souple.

8. Dispositif (1) selon l'une quelconque des revendications précédentes, dans lequel ledit dispositif (1) peut en outre être déplacé dans une troisième position.

9. Véhicule (2) comportant au moins un dispositif selon l'une quelconque des revendications précédentes, ledit au moins un dispositif étant déplaçable entre au moins une première position active, dans laquelle il constitue une protection anti-encastrement (I) et une deuxième position active, dans laquelle il constitue un support de véhicule pendant une manipulation de charge (S), ledit au moins un dispositif (1) comportant au moins un bras porteur déplaçable, qui peut être monté sur un châssis dudit véhicule (2) et est muni d'au moins une poutre s'étendant sensiblement horizontalement, qui dans ladite première position active est une poutre de protection anti-encastrement, et dans ladite deuxième position active est une poutre de support, et des moyens de déplacement (16) pour déplacer ledit au moins un bras porteur déplaçable entre lesdites première et deuxième positions actives.

10. Véhicule (2) selon la revendication 9, dans lequel au moins un dispositif est monté sur une extrémité arrière du véhicule (2).

11. Véhicule (2) selon la revendication 8 ou 9, dans lequel au moins un dispositif (1) est monté sur une extrémité avant du véhicule (2).

12. Véhicule (82) selon l'une quelconque des revendications 9 à 11, dans lequel ladite au moins une poutre s'étendant sensiblement horizontalement s'étend sur une longueur qui est sensiblement égale à la largeur totale dudit véhicule (2).

13. Véhicule (2) selon l'une quelconque des revendications 9 à 12, dans lequel les moyens de déplacement (16) comportent des vérins hydrauliques reliés à un système hydraulique existant sur le véhicule (2).

14. Véhicule (2) selon l'une quelconque des revendications 9 à 12, dans lequel les moyens de déplacement (16) comportent des vérins pneumatiques reliés à un système pneumatique existant sur le véhicule (2).
